(19) **Europäisches Patentamt**

**European Patent Office**

**Office européen des brevets**

(11) **EP 1 524 625 A2**

(12) **EUROPEAN PATENT APPLICATION**

(43) Date of publication:
**20.04.2005 Bulletin 2005/16**

(51) Int Cl.⁷: $G06T\ 5/00$, $G06T\ 3/40$

(21) Application number: **04024343.8**

(22) Date of filing: **13.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **17.10.2003 JP 2003357954**

(71) Applicant: **MATSUSHITA ELECTRIC INDUSTRIAL CO., LTD.**
**Kadoma-shi, Osaka 571-8501 (JP)**

(72) Inventors:
• **Tezuka, Tadanori**
**Kaho-gun, Fukuoka-ken 820-0089 (JP)**

• **Toji, Bunpei**
**Iizuka-shi, Fukuoka-ken 820-0054 (JP)**
• **Nakahigashi, Hideto**
**Takatsuki-shi, Osaka 569-1046 (JP)**
• **Nagata, Mitsutoshi**
**Oobu-shi, Aichi-ken 474-0011 (JP)**

(74) Representative: **Pautex Schneider, Nicole et al**
**Novagraaf Internatinal SA**
**25, Avenue du Pailly**
**1220 Les Avanchets - Geneva (CH)**

(54) **Enhancement of interpolated image**

(57)    An interpolation unit (11) converts an inputted image with pixel precision into an interpolated image with sub-pixel precision. A brightness/chroma-decomposing unit (21) decomposes the interpolated image into brightness components with sub-pixel precision and the other. An image-processing unit (12) emphasizes components belonging to a specific frequency band of the decomposed brightness components. Edges neither enlarge nor look jaggy. A display result with rich clearness and high quality is obtained.

**EP 1 524 625 A2**

## Description

The present invention relates to an image-processing apparatus that emphasizes components of an inputted image, the components belonging to a specific frequency band. The image-processing apparatus improves clearness of the inputted image, while reducing side effects of the image-processing.

In this specification, a "sub-pixel" means a minute pixel element corresponding to one of a plurality of light-emitting elements. The plurality of light-emitting elements comprises one pixel of a display device configured according to sub-pixel structure. Furthermore, when data of an image has "sub-pixel precision", the data of the image corresponds to one of the plurality of light-emitting elements.

Furthermore, all kinds of physical quantity indicating how a color is bright, such as lightness, luminance, and so on, is generically called "brightness". Similarly, all kinds of physical quantity indicating how a color looks vivid, such as chromaticity, saturation, and so on, is generically called "chroma".

An image enhancer is one of known apparatuses that raise clearness of an image. The image enhancer multiplies high frequency components of the image by a multiple of a gain to generate enhanced components. The image enhancer adds the enhanced components to the image to output a result.

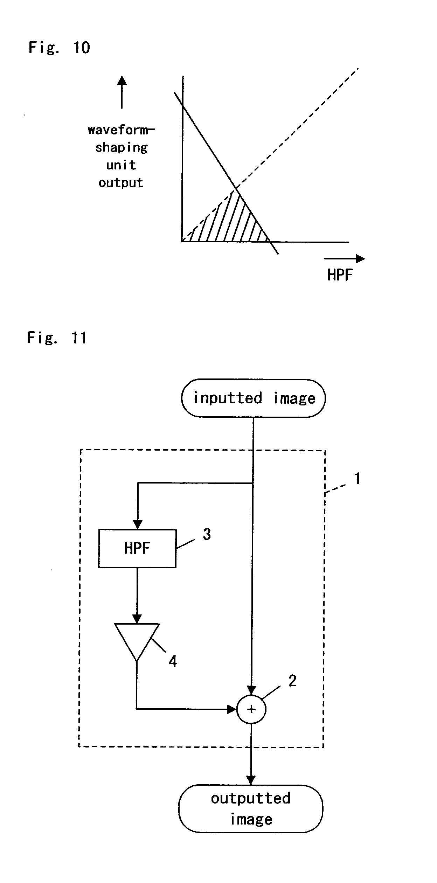

Fig. 11 is a block diagram illustrating a conventional image-processing apparatus. Referring to Fig. 11, the conventional image enhancer will now be concretely explained.

In an interior of an image-processing unit 1, an inputted image is inputted into an adder 2 and a high-pass filter 3. The high-pass filter 3 extracts high frequency components of the inputted image, and outputs the extracted high frequency components to a multiplier 4.

The multiplier 4 multiplies the extracted high frequency components by a multiple of a fixed gain to output multiplied high frequency components to the adder 2. The adder 2 adds the multiplied high frequency components to the inputted image to output an added result as an outputted image.

Accordingly, the high frequency components of the inputted image are compensated, thereby improving clearness of the inputted image. The gain expands the high frequency components of the inputted image. Outline of a small image (for example, an image of a small stone) preferably looks clearer.

However, side effects cannot be avoided. That is, in the outputted image, the small image enlarges in size. In some cases, clearness of the outputted image may be deteriorated as a whole. When the gain gets higher, edges of the image become jaggy, and display quality of the image is deteriorated.

Considering this point, published Japanese Patent Application Laid-Open No. H09-264606 discloses a technique that reduces a gain for the high frequency components, thereby preventing from expansion of small images. However, due to this, clearness of an image cannot be sufficiently improved. Furthermore, in the prior art, processes are performed with pixel precision.

In view of the above, an object of the present invention is to provide an image-processing apparatus that improves clearness of an image, while reducing side effects of image-processing.

A first aspect of the present invention provides an image-processing apparatus operable to process a sub-pixel precision image that possesses precision corresponding to one of a plurality of light-emitting elements, the plurality of light-emitting elements comprising one pixel of a display device, the image-processing apparatus comprising: an image-processing unit operable to emphasize components belonging to a specific frequency band of an inputted sub-pixel precision image to generate an emphasized sub-pixel precision image.

With this structure, the image inputted into the image-processing unit is processed in a condition of holding high resolution, that is, not with pixel precision but with sub-pixel precision.

Since, the image-processing unit emphasizes the components belonging to the specific frequency band of the inputted sub-pixel precision image, according to the emphasized image with sub-pixel precision or an image derived there-from, a display device can display an image holding the sub-pixel precision. Accordingly, a display result can earn clearness richer than that of the prior art.

A second aspect of the present invention provides an image-processing apparatus operable to process a sub-pixel precision image that possesses precision corresponding to one of a plurality of light-emitting elements, the plurality of light-emitting elements comprising one pixel of a display device, the image-processing apparatus comprising: an interpolation unit operable to convert a pixel precision inputted image to a sub-pixel precision interpolated image; a brightness/chroma-decomposing unit operable to decompose the sub-pixel precision interpolated image into sub-pixel precision brightness components and the other; and an image-processing unit operable to emphasize components belonging to a specific frequency band of the sub-pixel precision interpolated image to generate an emphasized sub-pixel precision image.

With this structure, a display result of a color inputted image can earn clearness richer than that of the prior art. When brightness components change, human eyes sensitively react. Therefore, brightness components separated from the color inputted image are emphasized, the human eyes feel effectively clearness.

A third aspect of the present invention provides an image-processing apparatus operable to process a sub-pixel precision image that possesses precision corresponding to one of a plurality of light-emitting elements, the plurality of light-emitting elements comprising one pixel of a display device, the image-processing apparatus comprising: an interpolation unit operable to convert a pixel precision inputted image to a sub-pixel precision interpolated image, the pixel precision inputted image being one of a black-and-white binary image and a gray scale image; and an image-processing unit operable to emphasize components belonging to a specific frequency band of the sub-pixel precision interpolated image to generate an emphasized sub-pixel precision image. With this structure, a display result of an uncolored inputted image, which is one of a black-and-white binary image and a gray scale image, can earn clearness richer than that of the prior art. When brightness components change, human eyes sensitively react. Therefore, brightness components separated from the uncolored inputted image are emphasized, the human eyes feel effectively clearness.

A fourth aspect of the present invention provides an image-processing apparatus operable to process a sub-pixel precision image that possesses precision corresponding to one of a plurality of light-emitting elements, the plurality of light-emitting elements comprising one pixel of a display device, the image-processing apparatus comprising: an interpolation unit operable to convert a pixel precision inputted image to a sub-pixel precision interpolated image; an image-processing unit operable to emphasize components belonging to a specific frequency band of the sub-pixel precision interpolated image to generate an emphasized sub-pixel precision image; and a sub-pixel-rendering-processing unit operable to perform sub-pixel-rendering-processes for the emphasized sub-pixel precision image to generate a display image.

Since the sub-pixel-rendering-processing unit is provided, without down sampling, a display device operable to display an image with sub-pixel precision can fully demonstrate its performance.

More concretely, when emphasis of components belonging to the specific frequency band has been performed, edges neither enlarge nor look jaggy. Therefore, a display result with clearness and high quality is obtained.

A fifth aspect of the present invention provides an image-processing apparatus as defined in the first aspect of the present invention, wherein the one pixel of the display device is composed of a sub-pixel corresponding to a red light-emitting element, a sub-pixel corresponding to a green light-emitting element, and a sub-pixel corresponding to a blue light-emitting element.

With this structure, using a display device (for example, a PDP (plasma display panel), an LCD, an organic electroluminescence) configured according to the sub-pixel structure, a display result of the inputted image can earn clearness richer than that of the prior art.

A sixth aspect of the present invention provides an image-processing apparatus as defined in the second aspect of the present invention, wherein the interpolation unit is operable to convert a pixel precision image to a sub-pixel precision image, based on pattern matching using a pattern defined according to an illuminant state of a target pixel and pixels adjacent to the target pixel.

With this structure, since interpolation by the interpolation unit reflects the illuminant state, precision of the interpolation is higher in comparison with a case where simple interpolation is used.

A seventh aspect of the present invention provides an image-processing apparatus as defined in the second aspect of the present invention, wherein the interpolation unit copies data of the pixel precision inputted image a number of times to generate the sub-pixel precision interpolated image, the number being equal to a number of the plurality of light-emitting elements comprising the one pixel of the display device.

With this structure, the simple interpolation enables rapid processing.

An eighth aspect of the present invention provides an image-processing apparatus as defined in the seventh aspect of the present invention, wherein the interpolation unit comprises a low-pass filter operable to remove high frequency components from the sub-pixel precision interpolated image.

With this structure, high frequency components being not contained originally in the inputted image are removed. As for side effects of simple interpolation, the high frequency components tend to arise.

Since the high frequency components not contained originally are removed prior to emphasis by the image-processing unit, there is no way that the high frequency components not contained originally are emphasized.

A ninth aspect of the present invention provides an image-processing apparatus as defined in the fourth aspect of the present invention, wherein the sub-pixel-rendering-processing unit comprises: a brightness/chroma-decomposing unit operable to decompose the emphasized sub-pixel precision image into sub-pixel precision brightness components and sub-pixel precision chroma components; color fringe-reducing unit operable to perform filtering processes for the sub-pixel brightness components to output filtered sub-pixel brightness components as a first result, the filtering processes reducing color fringes when the filtered sub-pixel brightness components are displayed; a chroma-processing unit operable to process the sub-pixel precision chroma components to output processed sub-pixel precision chroma components as a second result; and a display image-generating unit operable to generate a display image based on the first result and the second result.

With this structure, since the brightness components, which human eyes sensitively react, are emphasized with sub-pixel precision, the human eyes feel effectively clearness. Furthermore, the color fringe-reducing unit generates an image with few color fringes.

A tenth aspect of the present invention provides an image-processing apparatus as defined in the fourth aspect of the present invention, wherein the image-processing unit comprises: a high-pass filter operable to extract sub-pixel precision high frequency components from the sub-pixel precision interpolated image; a multiplier operable to multiply the sub-pixel precision high frequency components by a multiple of a gain to generate sub-pixel precision emphasized components; and an adder operable to add the sub-pixel precision emphasized components to the sub-pixel precision interpolated image to generate the emphasized sub-pixel precision image.

With this structure, since emphasis of outlines and/or edges with sub-pixel precision can be performed, human eyes feel effectively clearness.

Furthermore, a user of the image-processing apparatus can easily handle how the interpolated image is emphasized, because the multiplier linearly adds the sub-pixel precision emphasized components to the sub-pixel precision interpolated image to generate the emphasized sub-pixel precision image.

An eleventh aspect of the present invention provides an image-processing apparatus as defined in the tenth aspect of the present invention, wherein the image-processing unit further comprises a waveform-shaping unit operable to shape waveform of the sub-pixel precision high frequency components into a predetermined range to generate shaped sub-pixel precision high frequency components, and wherein the gain is adjusted according to the shaped sub-pixel precision high frequency components.

With this structure, the waveform-shaping unit is provided and the gain of the multiplier is adjusted according to the shaped sub-pixel precision high frequency components. Therefore, the gain of the multiplier is adjusted so as to be not too large, the image-processing result can be made naturally.

A twelfth aspect of the present invention provides an image-processing apparatus as defined in the second aspect of the present invention, wherein the image-processing unit performs in parallel processes thereof, amount of processes of the image-processing unit being first amount in a unit time, wherein the interpolation unit performs processes thereof, amount of processes of the interpolation unit being second amount in the unit time, and wherein the first amount is not less than the second amount multiplied by a number of the plurality of light-emitting elements comprising the one pixel of the display device.

With this structure, since the interpolation unit and the image-processing unit can operate using the same sampling frequency and/or the same clock number, real-time processing can be easily performed.

The above, and other objects, features and advantages of the present invention will become apparent from the following description read in conjunction with the accompanying drawings, in which like reference numerals designate the same elements.

Fig. 1 is a block diagram illustrating a display apparatus in an embodiment 1 of the present invention;
Fig. 2 (a) to Fig. 2 (f) are process explanatory drawings of image processing in the embodiment 1 of the present invention;
Fig. 3 is a block diagram illustrating an image-processing unit in the embodiment 1 of the present invention;
Fig. 4 (a) to Fig. 4 (d) are graphs each showing a waveform example in the embodiment 1 of the present invention;
Fig. 5 is a block diagram illustrating a display apparatus in the embodiment 1 (modification 1) of the present invention;
Fig. 6 is a block diagram illustrating a display apparatus in the embodiment 1 (modification 2) of the present invention;
Fig. 7 is a block diagram illustrating a display apparatus in an embodiment 2 of the present invention;
Fig. 8 is an explanatory drawing of side effects of simple interpolation in the embodiment 2 of the present invention;
Fig. 9 (a) to Fig. 9 (c) are graphs each showing a waveform example in the embodiment 2 of the present invention;
Fig. 10 is a graph showing output range by a waveform-shaping unit in the embodiment 2 of the present invention; and
Fig. 11 is a block diagram illustrating a conventional image-processing apparatus.

Referring to the drawings, embodiments of the present invention will now be explained.

(Embodiment 1)

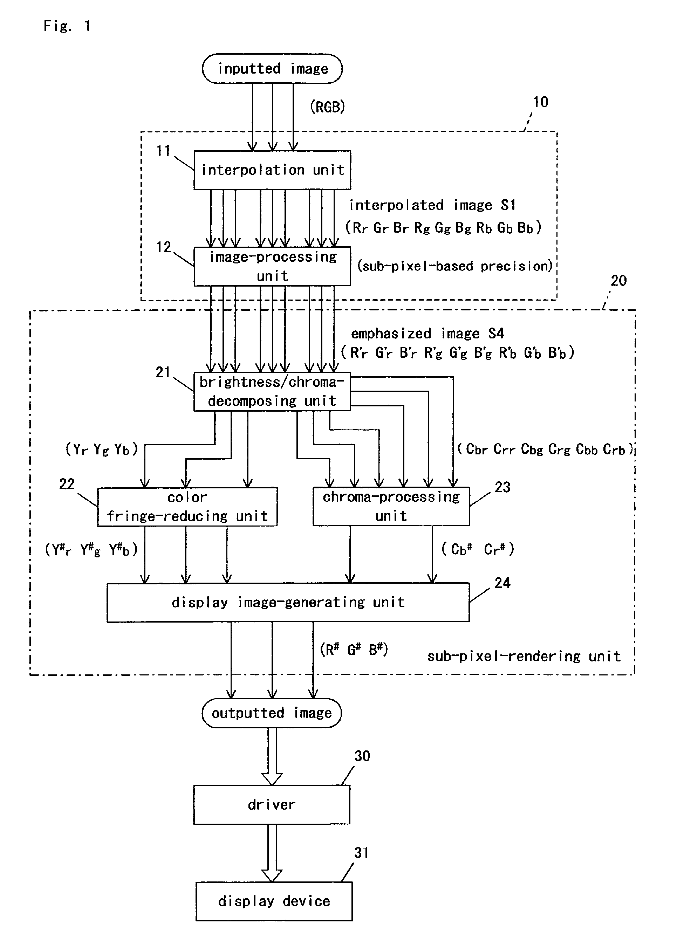

Fig. 1 is a block diagram illustrating an image-processing apparatus in an embodiment 1 of the present invention.

The image-processing apparatus of Fig. 1 comprises a pre-processing unit 10, a sub-pixel-rendering unit 20, a display device 31, and a driver 30. The pre-processing unit 20 pre-processes an inputted image. The driver 30 controls an illuminant state of the display device 31 according to an outputted image from the sub-pixel-rendering unit 20.

The display device 31 is preferably one of a PDP (plasma display panel), an LCD, and an organic electroluminescence, and so on.

In each of the preferable display devices, one pixel comprises three light-emitting elements, which emit three (red, green and blue) primary colors, respectively. The driver 30 independently controls each of the three light-emitting elements. That is, the preferable display devices are configured according to the sub-pixel structure.

However, the light-emitting elements do not have to emit three (red, green and blue) primary colors.

Direction where the light-emitting elements are arranged to comprise a pixel, may be horizontal or vertical. Furthermore, sequence that the light-emitting elements are arranged to comprise a pixel, is arbitrary.

Hereinafter, for convenience of description, assume that the three light-emitting elements, which respectively emit three (red, green and blue) primary colors, are horizontally arranged to comprise one pixel in order of red, green and blue.

Therefore, three sub-pixels, which respectively correspond to one of the three light-emitting elements, are arranged as well as the three light-emitting elements.

An interpolation unit 11 of the pre-processing unit 10 converts an inputted image (in this example, the inputted image is defined in RGB color space) into an interpolated image S 1 with sub-pixel precision.

In this example, a plurality of sub-pixels are horizontally arranged to comprise one pixel, and a plurality of pixels are horizontally arranged to comprise one line. Therefore, the interpolation unit 11 interpolates the inputted image to generate the interpolated image S 1 that has three times resolution in a horizontal direction (no interpolation is performed vertically).

The interpolation unit 11 may perform (1) simple interpolation, (2) pattern matching, (3) linear interpolation, and (4) bi-cubic interpolation, and so on.

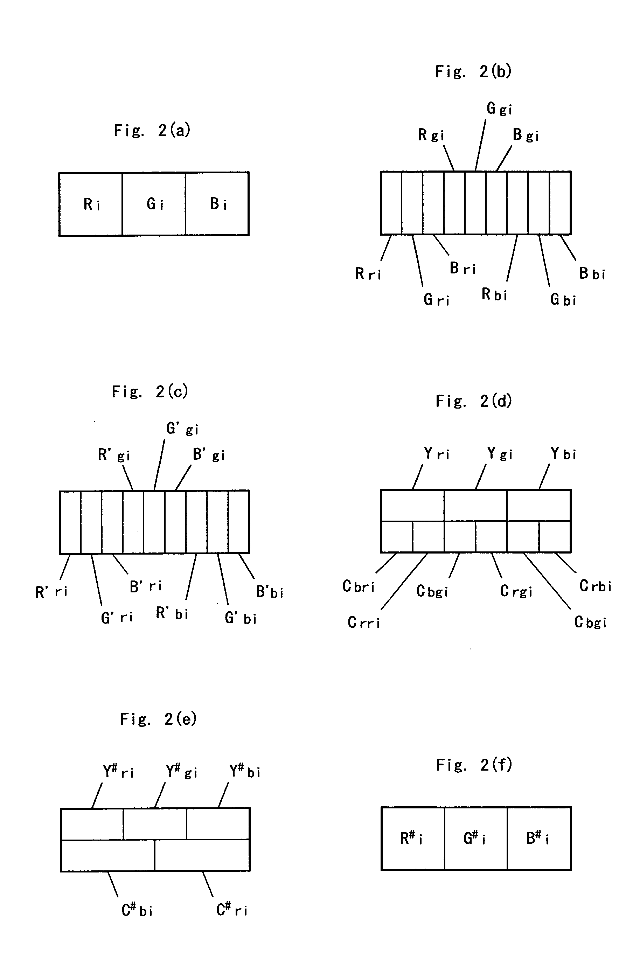

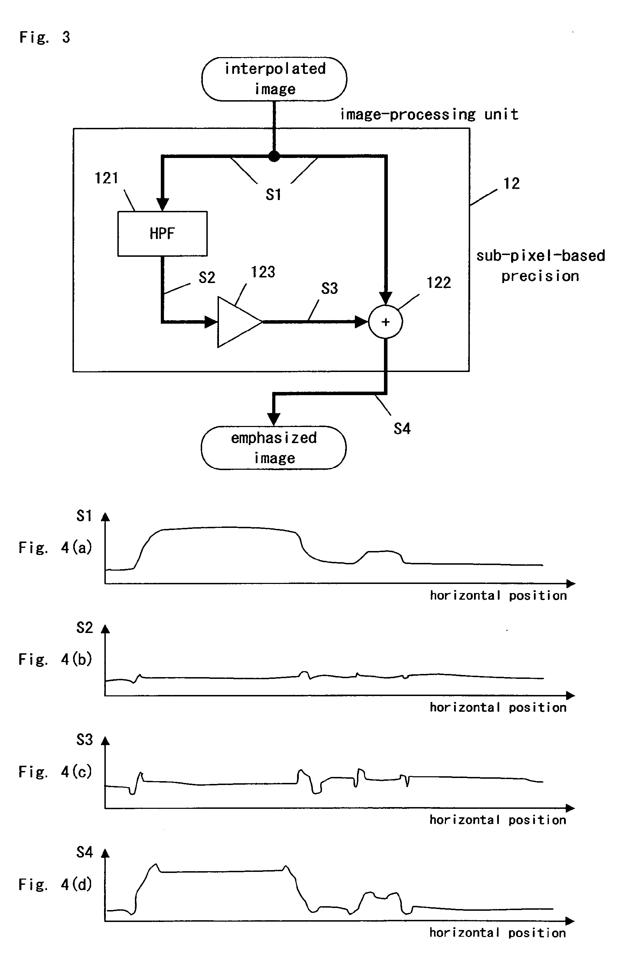

As shown in Fig. 2 (a), an index i (i = 1, 2, ..., n; n is a natural number of pixels in horizontal direction) is now introduced. Assume that data of the inputted image has three components $R_i$, $G_i$, and $B_i$ with respect to an "i"-th pixel from a horizontal left end of the display device 31.

Then, as shown in Fig. 2 (b), with respect to the "i"-th pixel, the interpolation unit 11 generates nine components $R_{ri}$, $G_{ri}$, $B_{ri}$, $R_{gi}$, $G_{gi}$, $B_{gi}$, $R_{bi}$, $G_{bi}$, and $B_{bi}$.

(1) According to the simple interpolation, the interpolation unit11 copies the three components $R_i$, $G_i$, and $B_i$ three times using the following formulas:

$$R_{ri}=R_{gi}=R_{bi}=R_i;$$

$$G_{ri}=G_{gi}=G_{bi}=G_i;$$

and

$$B_{ri}=B_{gi}=B_{bi}=B_i.$$

The number of three is a number of sub-pixels corresponding to one pixel.

However, when the simple interpolation is used, as mentioned later, high frequency components being not originally contained in the inputted image may arise, as side effects.

(2) According to pattern matching, the interpolation unit 11 performs pattern matching using a pattern. The pattern is defined using an illuminant state of a target pixel and pixels adjacent to the target pixel. The target pixel is the "i"-th pixel from the horizontal left end of the display device 31.

The subject matter of the present invention does not relate to how to perform the pattern matching. Therefore, detailed explanation (See published Japanese Patent Application Laid-Open No. 2002-354277, for example.) of pattern matching is omitted.

An image-processing unit 12 of the pre-processing unit 10 inputs the interpolated image S1 with sub-pixel precision from the interpolation unit 11, and generates an emphasized image S4 with sub-pixel precision. In the emphasized image S4, components of the interpolated image S1 are emphasized, and the components belong to a specific frequency band.

As shown in Fig. 2 (c), with respect to the "i"-th pixel, the emphasized image S4 has nine components $R'_{ri}$, $G'_{ri}$, $B'_{ri}$, $R'_{gi}$, $G'_{gi}$, $B'_{gi}$, $R'_{bi}$, $G'_{bi}$, and $B'_{bi}$.

In this embodiment, the image-processing unit 12 performs image-enhancing processes. These image-enhancing processes are carried out not with pixel precision but with sub-pixel precision. The image-processing unit 12 may perform not image-enhancing processing but other processes that improve clearness of the inputted image (for example, a contrast adjustment, gamma control, a color adjustment, and so on).

Referring to Fig. 3, a configuration of the image-processing unit 12 now will be explained. Herein, in Fig. 3 or later, thick arrows indicate that sub-pixel precision is used. The interpolated image S 1 with sub-pixel precision is inputted into a high-pass filter 121 and an adder 122. The high-pass filter 121 extracts high frequency components S2 from the interpolated image S1, and outputs the high frequency components S2 to a multiplier 123.

The multiplier123 multiplies the high frequency components S2 by a multiple of a fixed gain, and outputs a result thereof to the adder 122 as emphasized components S3.

The adder 122 adds the interpolated image S 1 and the emphasized components S3, and outputs an addition result as an emphasized image S4. All of the above processes are carried out with sub-pixel precision.

In each of Fig. 4 (a) to Fig. 4 (d), a horizontal axis thereof shows a horizontal position with sub-pixel precision, and a vertical axis thereof shows level of corresponding components S1, S2, S3, and S4.

Fig. 4 (a) shows a waveform example of the interpolated image S1, similarly, Fig. 4 (b) shows a waveform example of the high frequency components S2, Fig. 4 (c) shows a waveform example of the emphasized components S3, and Fig. 4 (d) shows a waveform example of the emphasized image S4, respectively.

When image-enhancing processing with pixel precision is performed for the emphasized image S4, in comparison with the above, rough processing with 1/3 precision is carried out in the direction of the horizontal axis. Therefore, it may be easily understood that image-enhance processing according to the embodiment 1 earns more clearness and the result thereof looks smoother, in comparison with the prior art.

Referring to Fig. 1 and Fig. 2, the sub-pixel-rendering unit 20 is explained. In Fig. 1, a brightness/ chroma-decomposing unit 21 decomposes the emphasized image S4 (R'ri, G'ri, B'ri, R'gi, G'gi, B'gi, R'bi, G'bi, and B'bi) into sub-pixel precision brightness components (Yri, Ygi, and Ybi) and sub-pixel precision chroma components (Cbri, Crri, Cbgi, Crgi, Cbbi, and Crbi) (See also Fig. 2 (d)). The emphasized image S4, the sub-pixel precision brightness components (Yri, Ygi, and Ybi), and the sub-pixel precision chroma components (Cbri, Crri, Cbgi, Crgi, Cbbi, and Crbi) have sub-pixel precision, respectively.

For example, the brightness/chroma-decomposing unit 21 can use the following transformation formulas:

$$Yi = 0.299Ri+0.587Gi+0.114Bi;$$

$$Cbi =-0.172Ri-0.339Gi+0.511Bi;$$

and

$$Cri = 0.511\ Ri-0.428Gi-0.083Bi.$$

A color fringe-reducing unit 22 performs filtering processes for the sub-pixel precision brightness components (Yri, Ygi, and Ybi) to output filtered sub-pixel precision brightness components (Y#ri, Y#gi, and Y#bi) as a first result. The filtering processes reduce color fringes when the filtered sub-pixel brightness components (Y#ri, Y#gi, and Y#bi) are displayed.

In this embodiment, the color fringe-reducing unit 22, using the following formulas, carries out color fringes-reducing processes for the sub-pixel precision brightness components (Yri, Ygi, and Ybi) to output the first result (Y#ri, Y#gi, and Y#bi) with sub-pixel precision:

$$Y\#ri=(Ybi\text{-}1 + Yri + Ygi )/3;$$

$$Y\#gi=(Yri + Ygi + Ybi )/3;$$

and

$$Y\#bi=(Ygi + Ybi + Ygi+1)/3.$$

Herein, the color fringe-reducing unit 22 uses a filter having three taps, whose taps ratio is a ratio of 1:1:1.

However, the color fringe-reducing unit 22 may use one of a filter having three taps, whose taps ratio is a ratio of 1:2:1, and a filter having five taps, whose taps ratio is a ratio of 1:2:3:2:1 or 1:4:6:4:1. Furthermore, the color fringe-reducing unit 22 may perform filtering processes described in published Japanese Patent Application Laid-Open No. 2002-41024, or published Japanese Patent Application Laid-Open No. 2002-99239.

When brightness given to a red sub-pixel corresponding to a red light-emitting element, brightness given to a green sub-pixel corresponding to a green light-emitting element, and brightness given to a blue sub-pixel corresponding to a blue light-emitting element is different from each other, in some cases, the red, green and blue light-emitting elements may emit in an unfavorable manner.

This phenomenon is called "color fringes" in this specification. This phenomenon tends to occur in a portion where brightness changes hard, color thereof may blot, and quality of an image is deteriorated.

The color fringe-reducing unit 22 reduces color fringes caused by sub-pixel-rendering processes. Of course, a ratio of a filter may be arbitrarily changed from those described above, insofar as the filter can reduce color fringes.

A chroma-processing unit 23 processes the sub-pixel precision chroma components (Cbri, Crri, Cbgi, Crgi, Cbbi, and Crbi) separated by the brightness/ chroma-decomposing unit 21, and outputs processed pixel precision chroma components (Cb#i, and Cr#i) as a second result.

For example, the chroma-processing unit 23 can use the following transformation formulas:

$$Cb\#i=(Cbri+Crgi+Cbbi)/3;$$

and

$$Cr\#i=(Crri+Crgi+Crbi)/3.$$

A display image-generating unit 24 generates a display image (R#i, G#i, and B#i) based on the first result (Y#ri, Y#gi, and Y#bi) and the second result (Cb#i, and Cr#i).

For example, the display image-generating unit 24 can use the following transformation formulas:

$$R\#i=Y\#ri+1.371C\#ri;$$

$$G\#i=Y\#gi-0.698C\#ri-0.336C\#bi;$$

11      **EP 1 524 625 A2**      12

and

$$B\#i=Y\#bi+1.732C\#bi.$$

Basically, brightness components (Y#ri, Y#gi, and Y#bi) respectively added to components (R#i, G#i, and B#i) of the display image, differ from each other. Thereby, a display result of the display device 31 reflects, without any loss, a result of the image-processing with sub-pixel precision. In addition, the formulas may be changed.

According to this embodiment, the inputted image with pixel precision is converted into the interpolated image with sub-pixel precision, the image processing is carried out with sub-pixel precision, and the display result of the display device 31 reflects, maintaining sub-pixel precision, the result of the image-processing with sub-pixel precision. Thereby, an image having more clearness than the prior art can be generated.

Furthermore, since the image has high resolution, the image looks smoother than the prior art, even when gain of the image-processing is high.

It is preferable that each interior of the pre-processing unit 10 and the sub-pixel-rendering unit 20 in parallel processes data three times as much as data of the inputted image.

If so, when the image-processing apparatus of Fig. 1 is configured with not software but hardware, although circuit scale of a portion performing sub-pixel-precision processing increases, it is preferable that an operating frequency of the portion need not be greater than a sampling frequency of the inputted image.

<Modification 1 of Embodiment 1>

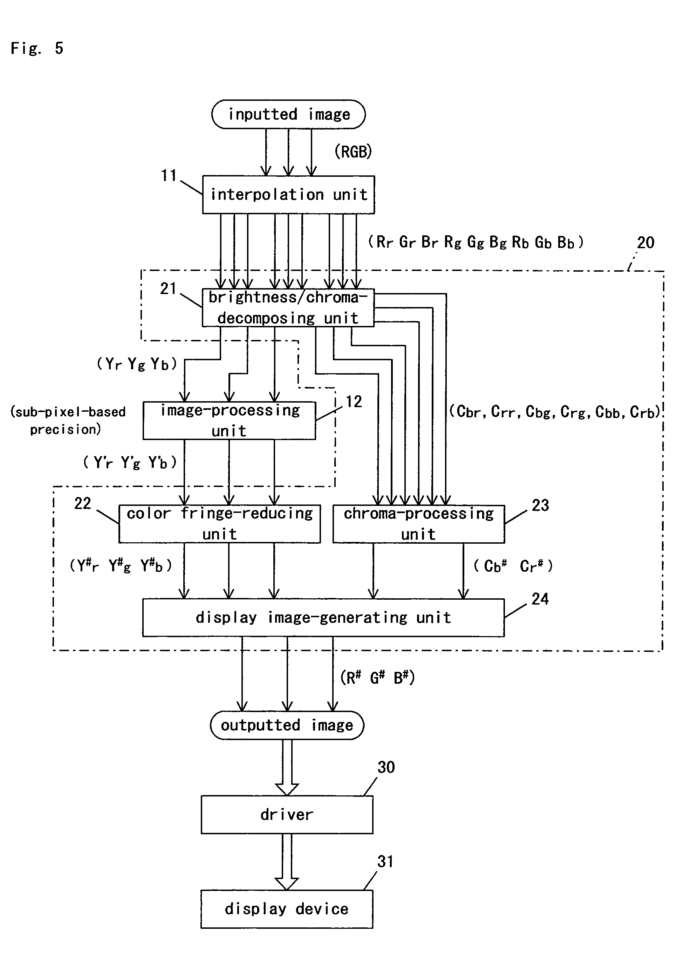

In the configuration of Fig. 1, the image-processing unit 12 mainly operates on brightness components. Therefore, when a colored inputted image should be supported, as shown in Fig. 5, processes for separating brightness components may be performed prior to processes for image processing by the image-processing unit 12.

<Modification 2 of Embodiment 1>

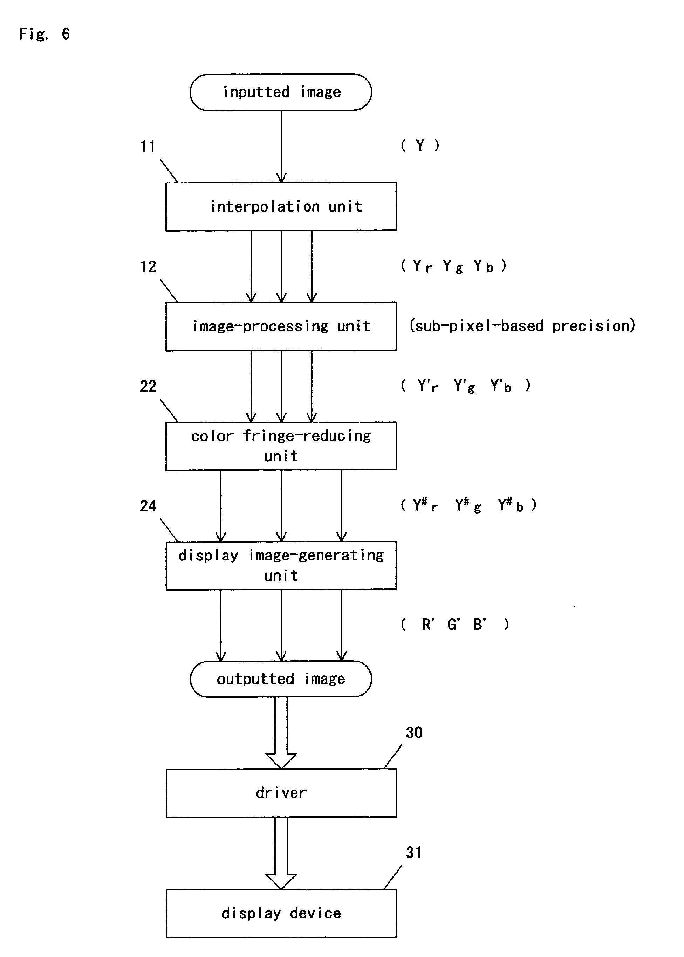

When the inputted image is limited to a black-and-white binary image and/or a gray scale image, as shown in Fig. 6, processes for separating brightness components and/or processing of chroma components can be omitted.

According to each of the modifications 1 and 2, similar to the configuration of Fig. 1, an image having more clearness than the prior art can be generated.

(Embodiment 2)

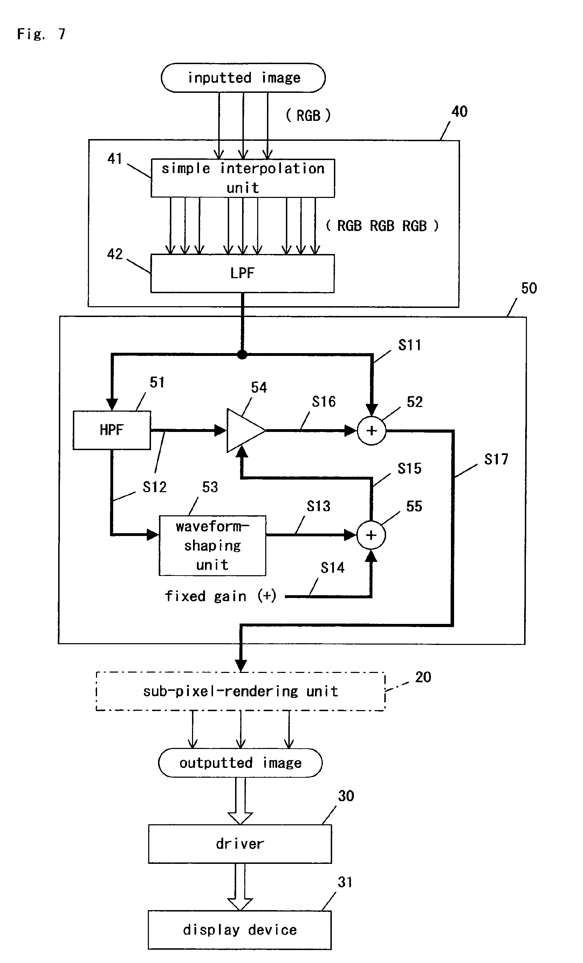

Next, referring to Fig. 7 to Fig. 10, an embodiment 2 of the present invention will now be explained. Fig. 7 is a block diagram illustrating an image-processing apparatus in the embodiment 2 of the present invention.

As shown in Fig. 7, in this embodiment, configurations of an interpolation unit 40 and an image-processing unit 50 are different from those of Fig. 1. In Fig. 7 or later, in order to avoid duplicated explanation, same symbols are given to same elements as those of Fig. 1.

An interpolation unit 40 comprises the following elements. A simple interpolation unit 41 copies three components Ri, Gi, and Bi of an inputted image. The simple interpolation unit 41 converts the inputted image into an interpolated image (Ri, Gi, Bi, Ri, Gi, Bi, Ri, Gi, and Bi) with sub-pixel precision.

Similar to the embodiment 1, in this embodiment, it is assumed that three sub-pixels corresponding to one pixel are horizontally arranged. Therefore, the simple interpolation unit 41 copies three times the three components Ri, Gi, and Bi in a horizontal direction, that is, the simple interpolation stated in embodiment 1 is performed.

As described above, when the simple interpolation is used, a side effect that high frequency components, which are not originally contained in the inputted image, may arise.

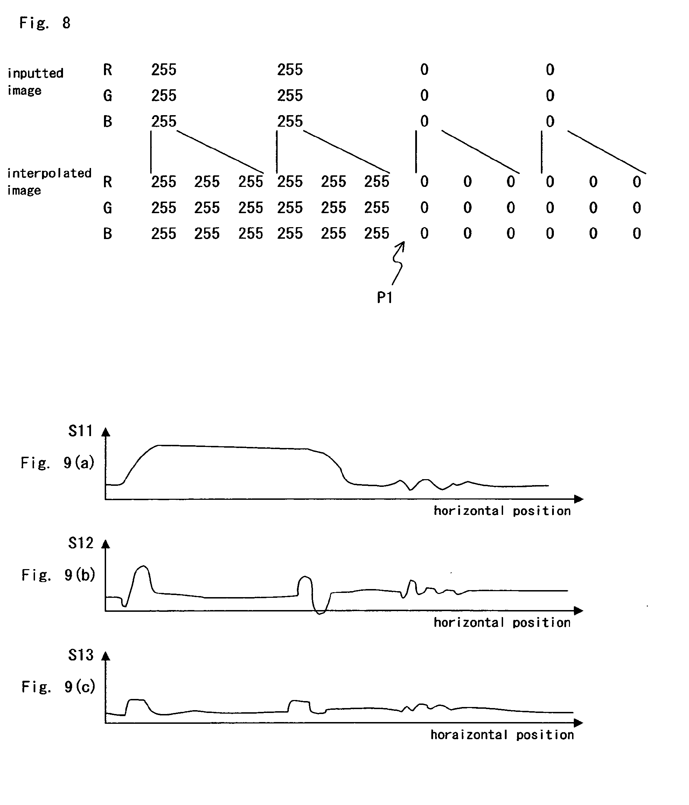

In Fig. 8, an upper portion thereof shows an example of data of the inputted image, and a lower portion thereof shows an example of data of the interpolated image, when the simple interpolation is performed.

In Fig. 8, the above-mentioned high frequency components have arisen near a point P1. In the point P1, each of RGB values of the interpolated image changes from "255" to "0" at the intervals as wide as about 1/3 of pixel width, and each of RGB values of the inputted image changes from "255" to "0" at the intervals of the pixel width.

This means that the values of the interpolated image changes in a frequency domain higher than a frequency domain where the values of the inputted image changes. In other words, the interpolated image contains high frequency components more than the inputted image does.

If the image-processing unit 50 processes (for example, enhances) the interpolated image simply interpolated by the interpolation unit 41, high frequency components, which are not originally contained in the inputted image and generated according to the simple interpolation, are unnaturally enhanced.

In this embodiment, a low-pass filter 42 is provided between the simple interpolation unit 41 and the image-processing unit 50. The low-pass filter 42 reduces the high frequency components caused by side effects of the simple interpolation. Thereby, image-processing can be naturally performed.

Data outputted from the low-pass filter 42 is inputted into the image-processing unit 50 as an interpo-

7

lated image S 11 with sub-pixel precision.

As shown in Fig. 7, the image-processing unit 50 comprises the following elements. Each of a high-pass filter 51 and a first adder 52 inputs the interpolated image S11 (See also Fig. 9 (a)).

The high-pass filter 51 extracts high frequency components S12 with sub-pixel precision from the interpolated image S11 (See also Fig. 9 (b)), and outputs the high frequency components S12 to a multiplier 54 and a waveform-shaping unit 53.

The multiplier 54 multiplies the high frequency components S12 by a multiple of a gain adjustment value S15 to generate multiplied high frequency components as the emphasized components S16 with sub-pixel precision, and outputs the emphasized components S16 with sub-pixel precision to the first adder 52.

The waveform-shaping unit 53 shapes a waveform of the high frequency components S12 as shown in Fig. 9 (b) within a fixed range as shown in Fig. 9 (c). Furthermore, in this embodiment, according to a characteristic shown in Fig. 10, the waveform-shaping unit 53 extracts components existing in a slant-lined portion of Fig. 10, and outputs a result thereof as the shaped high frequency components S13 to a second adder 55.

According to the characteristic shown in Fig. 10, when output of the high-pass filter 51 exceeds a fixed level, the shaped high frequency components S13 become small. Thereby, when the output of the high-pass filter 51 is comparatively large, the limiting processes are performed such that a gain value of the multiplier 54 is not too large.

The waveform-shaping unit 53 may perform one of other gain adjustments (for example, adjustment based on an absolute value, coring, and so on).

As shown in Fig. 7, the second adder 55 inputs a positive fixed gain value, and adds the positive fixed gain value to the shaped high frequency components S13 to output a result thereof to the multiplier 54 as a gain adjustment value S15.

The multiplier 54 multiplies the high frequency components S 12 by a multiple of the gain adjustment value S15, and outputs a result thereof to the first adder 52 as emphasized components S 16 with sub-pixel precision.

The first adder 52 adds the emphasized components S16 with sub-pixel precision to the interpolated image S11 with sub-pixel precision, and outputs a result thereof to the sub-pixel-rendering unit 20 as an emphasized image S 17 with sub-pixel precision.

Since the high frequency components caused by the simple interpolation are reduced, the image-processing according to this embodiment earns a natural image result.

Adjusting the gain value of the image-processing unit 50 reduces turnups caused by over gain and/or color fringes. Accordingly, a display result with rich clearness and high quality can be obtained.

According to the present invention, an inputted image is interpolated into an interpolated image with sub-pixel precision. After that, without down sampling, a display result reflects a result of the above-mentioned image-processing, thereby improving clearness of the display result.

When an image processing for emphasizing of high frequency components of an image is performed, edges neither enlarge nor look jaggy. Therefore, a display result with rich clearness and high quality is obtained, in comparison with the prior art.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

**Claims**

1. An image-processing apparatus operable to process a sub-pixel precision image that possesses precision corresponding to one of a plurality of light-emitting elements, the plurality of light-emitting elements comprising one pixel of a display device (31), the image-processing apparatus comprising:

   an image-processing unit (12) operable to emphasize components belonging to a specific frequency band of an inputted sub-pixel precision image to generate an emphasized sub-pixel precision image.

2. An image-processing apparatus operable to process a sub-pixel precision image that possesses precision corresponding to one of a plurality of light-emitting elements, the plurality of light-emitting elements comprising one pixel of a display device (31), the image-processing apparatus comprising:

   an interpolation unit (11) operable to convert a pixel precision inputted image to a sub-pixel precision interpolated image;
   a brightness/chroma-decomposing unit (21) operable to decompose the sub-pixel precision interpolated image into sub-pixel precision brightness components and the other; and
   an image-processing unit (12) operable to emphasize components belonging to a specific frequency band of the sub-pixel precision interpolated image to generate an emphasized sub-pixel precision image.

3. An image-processing apparatus operable to process a sub-pixel precision image that possesses precision corresponding to one of a plurality of light-emitting elements, the plurality of light-emitting elements comprising one pixel of a display device (31), the image-processing apparatus comprising:

an interpolation unit (11) operable to convert a pixel precision inputted image to a sub-pixel precision interpolated image, the pixel precision inputted image being one of a black-and-white binary image and a gray scale image; and an image-processing unit (12) operable to emphasize components belonging to a specific frequency band of the sub-pixel precision interpolated image to generate an emphasized sub-pixel precision image.

4. An image-processing apparatus operable to process a sub-pixel precision image that possesses precision corresponding to one of a plurality of light-emitting elements, the plurality of light-emitting elements comprising one pixel of a display device (31), the image-processing apparatus comprising:

an interpolation unit (11) operable to convert a pixel precision inputted image to a sub-pixel precision interpolated image; an image-processing unit (12) operable to emphasize components belonging to a specific frequency band of the sub-pixel precision interpolated image to generate an emphasized sub-pixel precision image; and a sub-pixel-rendering-processing unit (20) operable to perform sub-pixel-rendering-processes for the emphasized sub-pixel precision image to generate a display image.

5. The image-processing apparatus as claimed in claim 1, wherein the one pixel of the display device (31) is composed of a sub-pixel corresponding to a red light-emitting element, a sub-pixel corresponding to a green light-emitting element, and a sub-pixel corresponding to a blue light-emitting element.

6. The image-processing apparatus as claimed in claim 2, wherein said interpolation unit (11) is operable to convert a pixel precision inputted image to a sub-pixel precision interpolated image, based on pattern matching using a pattern defined according to an illuminant state of a target pixel and pixels adjacent to the target pixel.

7. The image-processing apparatus as claimed in claim 2, wherein said interpolation unit (11) copies data of the pixel precision inputted image a number of times to generate the sub-pixel precision interpolated image, the number being equal to a number of the plurality of light-emitting elements comprising the one pixel of the display device (31).

8. The image-processing apparatus as claimed in claim 7, wherein said interpolation unit (11) comprises a low-pass filter operable to remove high frequency components from the sub-pixel precision interpolated image.

9. The image-processing apparatus as claimed in claim 4, wherein said sub-pixel-rendering-processing unit (20) comprises:

a brightness/chroma-decomposing unit (21) operable to decompose the emphasized sub-pixel precision image into sub-pixel precision brightness components and sub-pixel precision chroma components; a color fringe-reducing unit (22) operable to perform filtering processes for the sub-pixel brightness components to output filtered sub-pixel brightness components as a first result, the filtering processes reducing color fringes when the filtered sub-pixel brightness components is displayed; a chroma-processing unit (23) operable to process the sub-pixel precision chroma components to output processed sub-pixel precision chroma components as a second result; and a display image-generating unit (24) operable to generate a display image based on the first result and the second result.

10. The image-processing apparatus as claimed in claim 4, wherein said image-processing unit (12) comprises:

a high-pass filter (121) operable to extract sub-pixel precision high frequency components from the sub-pixel precision interpolated image; a multiplier (123) operable to multiply the sub-pixel precision high frequency components by a multiple of a gain to generate sub-pixel precision emphasized components; and an adder (122) operable to add the sub-pixel precision emphasized components to the sub-pixel precision interpolated image to generate the emphasized sub-pixel precision image.

11. The image-processing apparatus as claimed in claim 10, wherein said image-processing unit (50) further comprises a waveform-shaping unit (53) operable to shape waveform of the sub-pixel precision high frequency components into a predetermined range to generate shaped sub-pixel precision high frequency components, and wherein the gain is adjusted according to the shaped sub-pixel precision high frequency components.

**12.** The image-processing apparatus as claimed in claim 2, wherein said image-processing unit (12) performs in parallel processes thereof, amount of processes of said image-processing unit (12) being first amount in a unit time,
wherein said interpolation unit (11) performs processes thereof, amount of processes of said interpolation unit (11) being second amount in the unit time, and
wherein the first amount is not less than the second amount multiplied by a number of the plurality of light-emitting elements comprising the one pixel of the display device (31).

**13.** A display apparatus comprising: an image-processing apparatus; a display device (31); and a driver (30),
wherein said image-processing apparatus is operable to process a sub-pixel precision image that possesses precision corresponding to one of a plurality of light-emitting elements, the plurality of light-emitting elements comprising one pixel of said display device (3 1 ),
wherein said image-processing apparatus comprises an image-processing unit (12) operable to emphasize components belonging to a specific frequency band of an inputted sub-pixel precision image to generate an emphasized sub-pixel precision image, and
wherein said driver (30) controls said display device (31) according to the emphasized sub-pixel precision image generated by said image-processing apparatus.

**14.** An image-processing method comprising:

processing a sub-pixel precision image that possesses precision corresponding to one of a plurality of light-emitting elements, the plurality of light-emitting elements comprising one pixel of a display device (31); and
emphasizing components belonging to a specific frequency band of an inputted sub-pixel precision image to generate an emphasized sub-pixel precision image.

**15.** An image-processing method comprising:

processing a sub-pixel precision image that possesses precision corresponding to one of a plurality of light-emitting elements, the plurality of light-emitting elements comprising one pixel of a display device (31);
converting a pixel precision inputted image to a sub-pixel precision interpolated image;
decomposing the sub-pixel precision interpolated image into sub-pixel precision brightness components and the other; and

emphasizing components belonging to a specific frequency band of the sub-pixel precision interpolated image to generate an emphasized sub-pixel precision image.

**16.** An image-processing method comprising:

processing a sub-pixel precision image that possesses precision corresponding to one of a plurality of light-emitting elements, the plurality of light-emitting elements comprising one pixel of a display device (31);
converting a pixel precision inputted image to a sub-pixel precision interpolated image, the pixel precision inputted image being one of a black-and-white binary image and a gray scale image; and
emphasizing components belonging to a specific frequency band of the sub-pixel precision interpolated image to generate an emphasized sub-pixel precision image.

**17.** An image-processing method comprising:

processing a sub-pixel precision image that possesses precision corresponding to one of a plurality of light-emitting elements, the plurality of light-emitting elements comprising one pixel of a display device (31);
converting a pixel precision inputted image to a sub-pixel precision interpolated image;
emphasizing components belonging to a specific frequency band of the sub-pixel precision interpolated image to generate an emphasized sub-pixel precision image; and
performing sub-pixel-rendering-processes for the emphasized sub-pixel precision image to generate a display image.

Fig. 1

Fig. 2(a)

```
┌──────┬──────┬──────┐
│  R i │  G i │  B i │
└──────┴──────┴──────┘
```

Fig. 2(b)

G gi
R gi    B gi

R ri    B ri    B bi
G ri    R bi    G bi

Fig. 2(c)

G' gi
R' gi    B' gi

R' ri    B' ri    B'bi
G' ri    R' bi    G' bi

Fig. 2(d)

Y ri    Y gi    Y bi

Cbri    Cbgi    Crgi    Crbi
Crri                    Cbgi

Fig. 2(e)

Y# ri    Y# gi    Y# bi

C# bi    C# ri

Fig. 2(f)

```
┌──────┬──────┬──────┐
│ R# i │ G# i │ B# i │
└──────┴──────┴──────┘
```

Fig. 3

Fig. 4(a)

Fig. 4(b)

Fig. 4(c)

Fig. 4(d)

Fig. 5

Fig. 6

```
                    ┌──────────────────────┐
                    │   inputted image     │
                    └──────────────────────┘
                               │
11                             │              ( Y )
  ┌────────────────────────────▼───────────┐
  │         interpolation unit             │
  └────────────────────────────────────────┘
                │       │       │
12              │       │       │         ( Y r  Y g  Y b )
  ┌─────────────▼───────▼───────▼──────────┐
  │      image-processing unit             │  (sub-pixel-based precision)
  └────────────────────────────────────────┘
                │       │       │
22              │       │       │         ( Y'r  Y'g  Y'b )
  ┌─────────────▼───────▼───────▼──────────┐
  │      color fringe-reducing             │
  │            unit                        │
  └────────────────────────────────────────┘
                │       │       │
24              │       │       │         ( Y#r  Y#g  Y#b )
  ┌─────────────▼───────▼───────▼──────────┐
  │    display image-generating            │
  │            unit                        │
  └────────────────────────────────────────┘
                │       │       │
                │       │       │         ( R'  G'  B' )
              ┌─▼───────▼───────▼─┐
              │  outputted image  │
              └───────────────────┘
                        │
                        ▼
30
  ┌────────────────────────────────────────┐
  │               driver                   │
  └────────────────────────────────────────┘
                        │
                        ▼
31
  ┌────────────────────────────────────────┐
  │          display device                │
  └────────────────────────────────────────┘
```

Fig. 7

Fig. 8

| inputted image | R | 255 | | 255 | | 0 | | 0 | |
| | G | 255 | | 255 | | 0 | | 0 | |
| | B | 255 | | 255 | | 0 | | 0 | |

| interpolated image | R | 255 | 255 | 255 | 255 | 255 | 255 | 0 | 0 | 0 | 0 | 0 | 0 |
| | G | 255 | 255 | 255 | 255 | 255 | 255 | 0 | 0 | 0 | 0 | 0 | 0 |
| | B | 255 | 255 | 255 | 255 | 255 | 255 | 0 | 0 | 0 | 0 | 0 | 0 |

P1

S11

Fig. 9(a)

horizontal position

S12

Fig. 9(b)

horizontal position

S13

Fig. 9(c)

horaizontal position

Fig. 10

Fig. 11